# EUROPEAN PATENT SPECIFICATION

(11) **EP 4 080 178 B1**
(45) Date of publication and mention of the grant of the patent: **23.07.2025**
(21) Application number: 21000113.7
(22) Date of filing: 23.04.2021
(51) Int. Cl.: G02F 2/02, G02F 1/09, G01J 3/42, G01J 3/10

(54) **SPINTRONIC TERAHERTZ EMITTER**
SPINTRONISCHER TERAHERTZSTRAHLER
ÉMETTEUR TÉRAHERTZ SPINTRONIQUE

(43) Date of publication of application: 26.10.2022
(73) Proprietor: Freie Universität Berlin, 14195 Berlin (DE); Johannes Gutenberg-Universität Mainz, 55122 Mainz (DE)
(72) Inventor: KLÄUI, Mathias, Prof. Dr., 55122 Mainz (DE); KAMPFRATH, Tobias, Prof. Dr., 14513 Teltow (DE); SEIFERT, Tom, Dr., 10557 Berlin (DE); GÜCKSTOCK, Oliver, 14195 Berlin (DE); NADVORNIK, Lukas, Dr., 120 00 Prag (CZ)
(74) Representative: Müller, Wolfram Hubertus

(56) References cited:
- CN-A- 108 023 263
- CN-B- 110 535 003
- US-A1- 2019 227 404
- HIBBERD M T ET AL: "Magnetic-field tailoring of the terahertz polarization emitted from a spintronic source", APPLIED PHYSICS LETTERS, A I P PUBLISHING LLC, US, vol. 114, no. 3, 23 January 2019 (2019-01-23), XP012234922, ISSN: 0003-6951, [retrieved on 20190123], DOI: 10.1063/1.5055736
- GUECKSTOCK OLIVER ET AL: "Modulating the polarization of broadband terahertz pulses from a spintronic emitter at rates up to 10 kHz", OPTICA, vol. 8, no. 7, 20 July 2021 (2021-07-20), US, pages 1013, XP055844232, ISSN: 2334-2536, DOI: 10.1364/OPTICA.430504

## Description

The present disclosure relates to a spintronic terahertz emitter in accordance with the preamble of claim 1 and a corresponding method.

As the terahertz (THz) spectral window coincides with many fundamental resonances of materials in solid state systems, gases and liquids, terahertz radiation enables highly selective spectroscopic insights with high temporal and spatial resolution. In particular, THz spectroscopy allows to characterize materials remotely by their spectral fingerprint in the THz range. Consequently, numerous applications in basic research, imaging, and quality control exist. To fully exploit the potential of terahertz radiation, efficient terahertz emitters as sources of ultrashort terahertz pulses are required.

Known spintronic terahertz emitters consist of a ferromagnetic layer and at least one adjacent nonmagnetic layer. A femtosecond laser pulse is incident on a thin-film sample and launches a spin current from the ferromagnetic layer into the nonmagnetic layer. Through the strong inverse spin Hall effect or inverse orbital Hall effect [Ding, Shilei, et al. "Harnessing orbital-to-spin conversion of interfacial orbital currents for efficient spin-orbit torques." Physical review letters 125.17 (2020): 177201] of the nonmagnetic layer, any spin current is converted into a transverse in-plane charge current. As the driving laser pulse has femtosecond duration, the transverse charge current is time-dependent and acts like an electric dipole that emits an electromagnetic pulse with frequencies extending into the THz range. Such spintronic terahertz emitters are described, e.g., in T. Seifert et al.: "Efficient metallic spintronic emitters of ultrabroadband terahertz radiation", Nature photonics, 2016. 10(7): p. 483-488. Such terahertz emitters are spintronic emitters as electron spins are exploited in the generation of the emitted terahertz radiation.

Spintronic terahertz emitters are further described in CN 108 023 263 A, US 2019/227404 A1, CN 110 535 003 B and HIBBERD M T ET AL: "Magnetic-field tailoring of the terahertz polarization emitted from a spintronic source",APPLIED PHYSICS LETTERS, A I P PUBLISHING LLC, US, vol. 114, no. 3, 23 January 2019.

There is a general desire to modulate amplitude and/or polarization of the emitted terahertz radiation for all kinds of modulation spectroscopy. Examples include lock-in-type low-noise detection, linear spectroscopy of anisotropic samples and the separation of symmetric and antisymmetric responses with respect to the THz field in nonlinear spectroscopy. State-of-the-art approaches to modulate the emitted terahertz radiation include amplitude modulation by mechanical chopping, or polarization modulation with a rotating THz retardation plate, the latter described in Wu, L., et al.: "A compact broadband terahertz range quarter-wave plate", Journal of Infrared, Millimeter, and Terahertz Waves, 2020: p. 1-13.

An object underlying the present invention is to provide for a spintronic terahertz emitter which allows modulation of the emitted electromagnetic terahertz radiation in an efficient manner and for a corresponding method.

The invention provides for a spintronic terahertz emitter with the features of claim 1 and a method for modulating the linear polarization of terahertz radiation emitted by a spintronic terahertz emitter with the features of claim 15. Embodiments of the invention are identified in the dependent claims.

According to an aspect of the invention, a spintronic terahertz emitter is considered which comprises at least one first, magnetic layer (which may be a ferromagnetic or ferrimagnetic layer), at least one second layer, and means for producing a magnetization in the first layer. The first layer is adapted by means of its material to drive, upon incidence of a femtosecond laser pulse on the first layer in a direction perpendicular to the plane of the first layer, a spin current from the first layer into the second layer. The second layer is adapted by means of its material to convert the spin current into a transverse charge current in a direction perpendicular to the magnetization of the first layer, the transverse charge current emitting terahertz radiation. With such an emitter, the emitted terahertz radiation is naturally linearly polarized, wherein the electric field component of the linearly polarized terahertz radiation lies in a plane that is perpendicular to the magnetization of the first layer.

According to the invention, means are provided for modulating the magnetization in the first layer in the kilohertz, megahertz, or gigahertz range, wherein modulation of the magnetization in the first layer causes modulation of the linear polarization of the terahertz radiation.

Aspects of the invention are thus based on the fact that the electric field component of the emitted terahertz radiation/pulse is polarized perpendicular to the magnetization of the first layer. Accordingly, the magnetization in the first layer unambiguously determines the polarization of the terahertz radiation. The invention takes advantage of this realization and modulates the polarization state of the emitted terahertz radiation by modulating the magnetization of the first layer in the kilohertz, megahertz, or gigahertz range, wherein the direction of the magnetization is modulated.

The invention thus provides for a spintronic terahertz emitter which emits linearly polarized terahertz radiation, wherein the linear polarization can be modulated in a desired manner.

The first and second layers may be thin-film layers having a thickness in the nanometer range, e.g., the thickness lying in the range between 1 and 100 nanometers.

The second layer is typically, but not necessarily a nonmagnetic layer.

It is pointed out that, in embodiments, the second layer may be integrated into the first layer, such that a single layer forms both the first layer and the second layer. In such case, a spin-to-charge conversion already happens inside the F-layer due to spin-orbit coupling [Zhang, Qi, et al. "Terahertz emission from anomalous Hall effect in a single-layer ferromagnet." Physical Review Applied 12.5 (2019): 054027.].

In other embodiments, there may be more than two layers, wherein one or several further magnetic or nonmagnetic layers are provided. For example, in an embodiment, a second magnetic layer F is put on top of the F/N emitter structure to have a F/N/F structure, wherein the second magnetic layer F has a stable in-plane magnetization, i.e., a large coercive field, and thus acts kind of like an external DC magnetic field, while the first magnetic layer F is still modulated by the magnetic fields.

In an embodiment, the means for modulating the magnetization in the first layer are configured to cause polarity modulation of the linear polarization of the terahertz radiation, wherein the magnetization vector of the magnetization is caused to switch between two discrete opposite values. Accordingly, polarity modulation is provided for, wherein the magnetization vector is switched between two discrete opposite values. This mode is of particular value for applications that include phase-sensitive amplifier (lock-in) detection. Such lock-in detection can be implemented without a loss of signal, wherein a loss of the signal occurs when using by prior art amplitude modulation of the terahertz field between 0 and 1 in which half of the signal is lost.

In another embodiment, the means for modulating the magnetization in the first layer are configured to cause direction modulation of the linear polarization of the terahertz radiation, wherein the magnetization vector is caused to rotate between two directions or angles. Such rotation between two directions or angles may be continuous and periodic. With direction modulation, the magnetization may be continuously and periodically rotated between two directions given by different angles (which might be unequal 180 degrees). This mode is of particular interest for probing optical anisotropies, for instance by terahertz ellipsometry. Alternatively, the means for modulating the magnetization in the first layer are configured to cause direction modulation of the linear polarization of the terahertz radiation, wherein the magnetization vector is caused to rotate over the full circle of 360°, this causing of a rotation of the plane of the linearly polarized terahertz radiation as modulation scheme.

In a further embodiment, the magnetization of the first layer is modulated with a time-dependent internal or external magnetic field at high frequencies in the kilohertz, megahertz, or gigahertz range. In other words, the means for producing a magnetization in the first layer comprise means for providing and modulating a magnetic field, which comprises at least a component that lies within the plane of the first layer, the magnetic field or magnetic field component producing the magnetization in the first layer. This aspect of the invention thus uses external or internal magnetic fields to control the magnetization direction. In this respect, it is to be noted that the magnetization direction is parallel or essentially parallel to the internal or external magnetic field that causes the magnetization if the coercive field of the first layer is much smaller than the modulating magnetic field.

In an embodiment, the magnetic field is an external magnetic field generated by magnets external to the first and second layers. The magnets may include at least two external coils or similar devices adjacent to the first layer modulated by alternative current (AC) in the kilohertz range. By applying an external magnetic field with time-varying direction, the magnetization direction can be controlled. In other embodiments, the external field can be generated by external permanent magnets or similar devices.

In one embodiment, exactly two external coils or similar devices are implemented to produce an external magnetic field that defines the magnetization the first layer. By switching the direction of the external magnetic field, polarity modulation of the linear polarization of the terahertz radiation can be implemented.

Alternatively, two external AC coils or similar devices and two permanent magnets or similar devices are arranged in a cross-shaped manner around the first layer, allowing to switch the polarization angle between two distinct planes/directions/angles in 180 degrees circle. It is pointed out that within the present disclosure the term "cross-shaped" defines any non-parallel arrangement, wherein it is not necessarily the case that the respective magnetic fields or structures are exactly perpendicular to each other.

Alternatively, four external AC coils or similar devices are arranged in a cross-shaped manner around the first layer, allowing to switch the polarization angle between two distinct planes/directions/angles in a 360 degrees circle or to rotate the polarization angle.

In a further embodiment, the magnetic field is a local magnetic field generated by a cross-shaped geometry of conductors guiding crossing currents, each conductor generating an Oersted field. For example, the means for providing a magnetic field are configured to modulate the crossing currents such that a rotating magnetic field up to the megahertz range is created. In accordance with this embodiment, on-chip Oersted-field generation is provided, which relies on specific cross-shaped geometries. Such cross-shaped geometries were described in Mawass, M.-A. et al.: "Switching by domain-wall automotion in asymmetric ferromagnetic rings", PHYSICAL REVIEW APPLIED 7, 044009, in the context of magnetic data storage, sensors, and logic devices.

It may be provided that the first layer is arranged on top of an underlayer that includes the conductors. Such underlayer may be a metal layer or a heavy metal layer. An insulator may be arranged between the underlayer and the first layer, in particular if the underlayer has a substantial thickness of, e.g., more than 100 nm. In such case, the insulator may be thicker than the terahertz wavelength (e.g. 300 µm in vacuum and at 1 THz). Further, in such case, the underlayer may be several THz wavelengths away or should have a hole to prevent reflection/shortcutting of the terahertz field.

In another embodiment, at least the second layer is integrated in an underlayer that includes the conductors. In such case, the underlayer is part of the emitter. In particular, the underlayer may be a heavy metal layer and the second layer or both the first and the second layer may be integrated with the underlayer.

In a still further embodiment, the means for providing a magnetic field are adapted to produce spin-orbit torques to switch the direction of magnetization in the first layer, wherein the means for providing a magnetic field include a spin-orbit-layer of spin-orbit-coupling suitable material transporting at least one modulated current in a specified direction, the modulated current leading to an internal modulated magnetic field at the surface the spin-orbit-layer. The first layer may be arranged adjacent the spin-orbit-layer.

This aspect of the invention uses spin torques switching for modulating the magnetization vector in the first layer. Use of spin transfer torques requires two non-collinear current directions. A preferred embodiment uses perpendicular currents to rotate the polarization in arbitrary directions. Spin-torque switching is generally discussed in A. Manchon et al.: "Current-induced spin-orbit torques in ferromagnetic and antiferromagnetic systems", Rev. Mod. Phys. 91, 035004 (2019). The magnetization may be switched on time scales down to the ps range, thereby allowing potentially for operation at GHz frequencies, as discussed in Garello et al.: "Ultrafast magnetization switching by spin-orbit torques", Appl. Phys. Lett. 105, 212402 (2014). If the spintronic emitter device comprises a multilayer of a magnetic layer and a heavy metal layer as nonmagnetic layer, switching by spin-orbit torques may be implemented in an efficient manner.

In still further embodiments, the means for producing a magnetization do not rely on an external or internal magnetic field.

In a first embodiment that does not rely on a magnetic field, the means for producing a magnetization in the first layer is a modulated voltage applied to a piezoelectric material layer adjacent the first layer, wherein the voltage modulation produces magnetically anisotropic, strain induced deformations in the piezoelectric material layer modulating the magnetization in the first layer. Alternatively, a modulated voltage is applied to an insulator material layer adjacent the first layer, wherein the voltage modulation produces in-plane anisotropy in the insulator material layer that modulates the magnetization in the first layer. The approach is potentially low-energy as it is only necessary to apply electric fields to the insulating or piezoelectric substrates.

It may be provided that the insulator material layer has a cross shape, wherein different voltages are applied to the ends of the cross to cause modulation of the magnetization vector to rotate between two directions. In other embodiments, different voltages are applied to opposite ends of an insulator material layer for effecting polarity modulation of the linear polarization of the terahertz radiation.

In a second embodiment that does not rely on a magnetic field for producing a magnetization, the means for producing a magnetization in the first layer is a means for producing femtosecond laser pulses radiated into the first layer, wherein the first layer consists of a material in which, upon interaction with the received femtosecond laser pulses, the magnetization is reversed from one direction to the other (also referred to as "all-optical switching"), thereby modulating the magnetization in the first layer. In this embodiment, femtosecond laser pulses can be used to toggle-switch the magnetic material (such as the alloy GdFe) between states of oppositely directed magnetization at a rate that is given by half the repetition rate of the pulsed laser (typically up to 80 MHz). The laser pulse that triggers the switching event does not have to be parallel to the plane of the first layer and may be incident from any direction. All-optical magnetization switching is generally described in G. P. Zhang et al: "Understanding all-optical spin switching: Comparison between experiment and theory", Modern Physics Letters B 32.28 (2018): 1830003.

Switching the magnetization by means of femtosecond laser pulses requires particular magnetic materials for implementing the first layer. Embodiments include ferrimagnetic rare-earth transition metal alloys. Examples for first layer materials which exhibit all optical switching are stated in Table 1 of G. P. Zhang et al, "Understanding all-optical spin switching: Comparison between experiment and theory", Modern Physics Letters B 32.28 (2018): 1830003.

It is to be noted that the considered femtosecond laser pulses for producing a magnetization in the first layer are different from the femtosecond laser pulses which drive a spin current from the first layer into the second layer. However, the former may (or may not) be from the same direction as the latter.

In a further aspect of the invention, a method for modulating the linear polarization of terahertz radiation emitted by a spintronic terahertz emitter is provided, wherein the spintronic terahertz emitter comprises a first, magnetic layer, a second layer, and means for producing a magnetization in the first layer. The method is characterized by modulating the magnetization (namely, the direction of magnetization) in the first layer in the kilohertz, megahertz, or gigahertz range, wherein modulation of the magnetization in the first layer causes modulation of the linear polarization of the terahertz radiation.

Embodiments of the inventive methods are similar to those identified in claims 2 to 14 with respect to the spintronic terahertz emitter.

The invention will be explained in more detail on the basis of exemplary embodiments with reference to the accompanying drawings in which:
- Fig. 1: schematically a spintronic terahertz emitter, the spintronic terahertz emitter comprising a magnetic layer and a nonmagnetic layer, wherein a magnetization in the magnetic layer is modulated;
- Fig. 2: schematically a polarity-modulation mode of the magnetization in the magnetic layer;
- Fig. 3: schematically a direction-modulation mode of the magnetization in the magnetic layer;
- Fig. 4: schematically electro-optically detected terahertz signal waveforms for opposite magnetizations;
- Fig. 5: a diagram depicting the signal maximum of terahertz pulses for opposite magnetizations as a function of time for a modulation frequency of 10 kHz;
- Fig. 6: an embodiment of a magnetic arrangement for providing a modulated external magnetic field modulating the magnetization in the magnetic layer of the spintronic terahertz emitter, the magnetic arrangement comprising two AC magnets comprising coils;
- Fig. 7: a further embodiment of a magnetic arrangement for providing a modulated external magnetic field modulating the magnetization in the magnetic layer of the spintronic terahertz emitter, the magnetic arrangement comprising two AC magnets comprising coils and two permanent magnets arranged in two perpendicular axes;
- Fig. 8: a further embodiment of a magnetic arrangement for providing a modulated external magnetic field modulating the magnetization in the magnetic layer of the spintronic terahertz emitter, the magnetic arrangement comprising four AC magnets comprising coils arranged in two perpendicular axes;
- Fig. 9: a further embodiment of a magnetic arrangement for providing a modulated external magnetic field modulating the magnetization in the magnetic layer of the spintronic terahertz emitter, the magnetic arrangement comprising two crossing modulated currents creating Oersted fields;
- Fig. 10: a horizontal field component and a vertical field component of the magnetic field created by the crossing modulated currents of Fig. 9, the two field components leading to a rotating magnetic field at MHz frequencies;
- Fig. 11: the embodiment of Fig. 9 in a schematic depiction, wherein an insulator is placed between an underlayer implementing the two crossing modulated currents and the spintronic terahertz emitter;
- Fig. 12: the embodiment of Fig. 11 except that the spintronic terahertz emitter is placed directly on the underlayer;
- Fig. 13: a further embodiment of a magnetic arrangement for providing a modulated external magnetic field modulating the magnetization in the magnetic layer of the spintronic terahertz emitter, the magnetic arrangement comprising two crossing modulated currents creating Oersted fields in an underlayer, wherein the underlayer is part of the spintronic terahertz emitter;
- Fig. 14: a further embodiment of a magnetic arrangement for providing a modulated external magnetic field modulating the magnetization in the magnetic layer of the spintronic terahertz emitter, the magnetic arrangement comprising two modulated currents for spin-orbit torque induced switching of the magnetization;
- Fig. 15: an embodiment similar to the embodiment of Fig. 14 except that the emitter material is integrated into an underlayer that comprises the two modulated currents;
- Fig. 16: an embodiment of an arrangement for directly modulating the magnetization in the magnetic layer of the spintronic terahertz emitter, the arrangement comprising voltage contacts for controlling in-plane magnetic anisotropy;
- Fig. 17: an embodiment of an arrangement for directly modulating the magnetization in the magnetic layer of the spintronic terahertz emitter, the arrangement comprising voltage contacts for electric-field control of the magnetization through magnetoelastic coupling in piezoelectric substrates; and
- Fig. 18: an embodiment of an arrangement for directly modulating the magnetization in the magnetic layer of the spintronic terahertz emitter, the arrangement using all optical switching of the magnetization by means of ultrashort laser pulses.

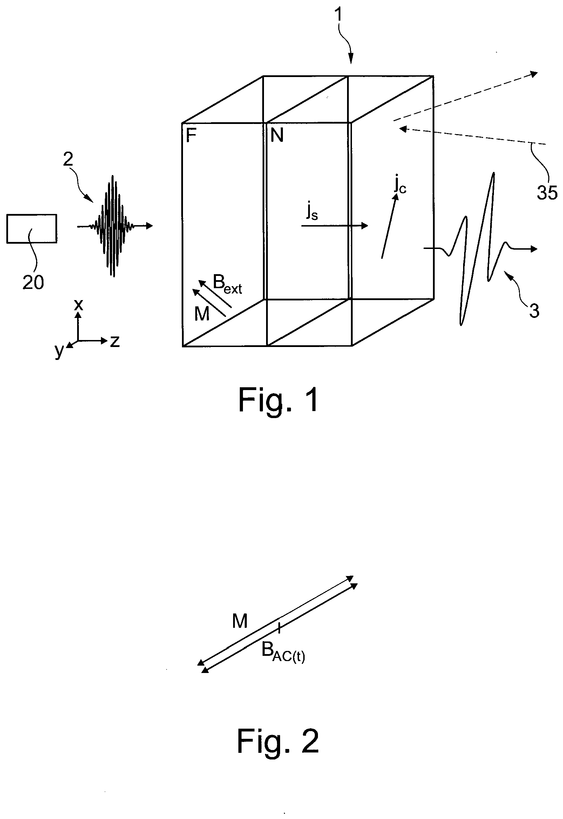

Fig. 1 depicts an embodiment of a spintronic terahertz (THz) emitter 1. The emitter 1 comprises a first layer F and a second layer N which are arranged parallel and adjacent to each other. The first layer F is a magnetic layer such as a ferromagnetic or ferrimagnetic layer. The second layer N is a nonmagnetic layer. A magnetization M is present in the first layer F. In the depicted embodiment, but not necessarily, the magnetization M is caused by an external magnetic field Bₑₓₜ, wherein the magnetization M and the external magnetic field Bₑₓₜ are arranged in a parallel manner.

In other embodiments, there may be more than one nonmagnetic layer N.

A femtosecond laser pulse 2 is incident on the first layer F in a direction perpendicular to the plane of the first layer F. The laser pulse 2 is generated by a laser system 20 which may be considered to represent part of the spintronic THz emitter 1. The incident femtosecond laser pulse 2 drives a spin current jₛ from the magnetic first layer F into the adjacent nonmagnetic second layer N. By the inverse spin Hall effect or inverse orbital Hall effect or other mechanisms of spin-to-charge-current conversion, the spin current jₛ is converted into a transverse charge current j_{c} in the plane of the second layer N that emits THz radiation 3 in form of a THz pulse (for each incident pulse 2). As the driving laser pulse 2 has femtosecond duration, the transverse charge current j_{c} is time-dependent and acts like an electric dipole that emits an electromagnetic pulse with frequencies extending into the THz range. The resulting electric field (depicted schematically in Fig. 1) of the THz radiation 3 is linearly polarized and its plane perpendicular to the direction of magnetization M of the first layer F.

The invention is based on the idea to modulate the direction of the magnetization M and, thus, the linearly polarized electric field E of the emitted THz pulse. As the THz radiation 3 electric field is linearly polarized and perpendicular to the magnetization M, modulating the direction of M allows to modulate the polarization of the THz radiation 3.

In the embodiment of Fig. 1, the direction of the magnetization M is modulated by the external in-plane magnetic field Bₑₓₜ which sets the magnetization M parallel to Bₑₓₜ: as the coercive field in the first layer F is much smaller than the external magnetic field amplitudes, the direction of the magnetization M follows the direction of the external magnetic field. The direction of the magnetization M is monitored using a continuous-wave laser beam 35 by means of the magneto-optic Kerr effect (MOKE) as is known in the art. To this end, the polarization rotation of the reflected laser beam 35 (wavelength, e.g., of 635 nm) is measured by using an assembly of a nearly crossed polarizer, a photodiode and an oscilloscope.

More particularly, in an embodiment, the spintronic THz emitter 1 may be adapted in the following manner. The THz emitter 1 is a thin-film trilayer system Sub∥W(2nm)]CoFeB(1.8nm)|Pt(2nm) where the substrate (Sub) is a double-side polished sapphire(0001) window. The ferromagnetic CoFeB layer F serves as spin current source. The two adjacent N layers Pt and W facilitate enhanced spin-to-charge current conversion owing to their large inverse spin Hall effect as detailed, e.g., in Seifert, T., et al.: "Efficient metallic spintronic emitters of ultrabroadband terahertz radiation", Nature photonics, 2016. 10(7): p. 483-488.

The femtosecond laser pulse 2 may have a center wavelength of 800 nm, a pulse energy of 1 nJ and a repetition rate of 75 MHz, to give an example. However, in principle, different wavelengths, pulse energies and repetition rates are possible. The laser pulse 2 is received from laser system 20 and incident on the emitter 1. The induced THz electromagnetic pulse 3 is linearly polarized, and its electric field is perpendicular to the magnetization M of the ferromagnetic CoFeB layer F.

The transient THz electric field 3 may be characterized by electro-optic detection in a ZnTe(110) crystal of thickness of 1 mm (not shown) using a co-propagating femtosecond pulse from the same laser 20. To measure both polarization components Eₓ and E_{y} of the THz electric field 3, a THz wire-grid polarizer may be placed behind the emitter 1 and the detection-crystal orientation and the gate-pulse polarization may be set such that the detection unit is equally sensitive to the components Eₓ and E_{y}. Because the THz field behind the emitter 1 is perpendicular to the magnetization M, the components of the THz field and related measured electro-optic signals are expected to scale according to respective components of the magnetization M.

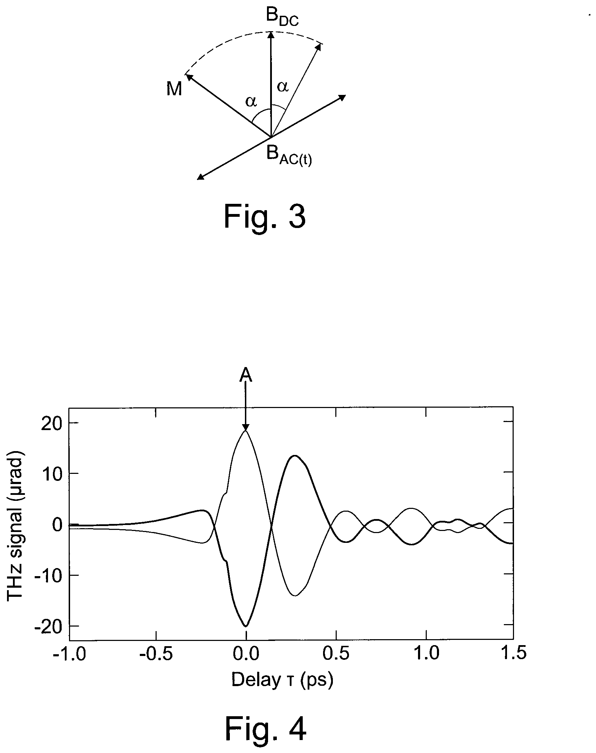

Referring to FIGs. 2 and 3, at least two distinct modes of operation of the modulation are possible, namely, polarity modulation and direction modulation. For polarity modulation, the magnetization vector M is abruptly switched between two discrete opposite values as shown in Fig. 2, wherein the two discrete opposite values are induced by a respectively changing external harmonic AC magnetic field B_{AC}(t). The harmonic AC field B_{AC}(t) may be generated by an electromagnet. B_{AC}(t) which, in this embodiment, is equal to Bₑₓₜ, and may be modulated sinusoidally in time.

For direction modulation, the magnetization M is continuously and periodically rotated between two directions given by angles ± α as shown in Fig. 3, wherein the magnetic field of an external harmonic AC magnetic field B_{AC}(t) and a DC magnetic field B_{DC} from a permanent magnet are superimposed. By adding a DC magnetic field B_{DC}, directional modulation of the magnetization M and, thus, of the terahertz radiation 3 electric field at kilohertz rates becomes possible. The resulting external field Bₑₓₜ = B_{AC}(t) + B_{DC} rotates the magnetization and continuously and periodically between the angles α. By controlling the strengths of the external magnetic field B_{AC}(t) or B_{DC}, different rotation angles α of the terahertz field direction may be achieved.

Fig. 4 shows the typical THz signal waveform 3 as a function of delay for the magnetizations ±M. Accordingly, polarity modulation is considered in Fig. 4. The signal reverses by more than 99% when the magnetization M is reversed. The reversal can be considered a multiplication with (-1) or a phase shift of 180°. The arrow A in Fig. 4 depicts the maximum value of the signal waveform 3.

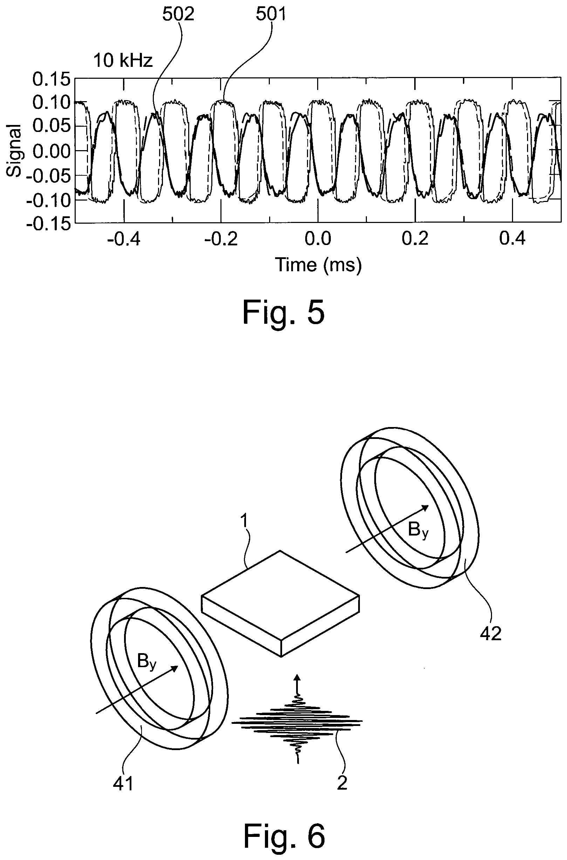

Fig. 5 shows in graph 501 the maximum values in accordance with arrow A for a plurality of the subsequent THz pulses 3 which experience polarity modulation. The polarity of the linear polarization of the emitted THz pulses 3 is modulated by 180° (or by the factor (-1)) with the frequency in which the magnetization M in magnetic layer F is modulated. In the depicted case, the modulation occurs with 10 kHz frequency. After a plurality of pulses 3 (wherein Fig. 5 only shows the maximum value as explained), the polarity in graph 501 is reversed such that there is polarity modulation. Graph 502 depicts the MOKE signal 35 in Fig. 1 multiplied by (-1) which indicates the change in magnetization M of layer F. As is to be expected, graphs 501 and 502 correlate.

In a similar manner, the linear polarization may modulate between different angles α.

As a general remark, to obtain a maximum modulation of the polarization of the emitted pulse 3, the magnetization M should be uniformly magnetized in the desired directions. Typically, at zero applied external field, magnetic materials form domain configurations with different areas of the magnetic element exhibiting different magnetization directions. As this reduces the polarization of the emitted THz radiation, the formation of domains, in embodiments, is suppressed. Different solutions may be implemented for such suppression:
a) By applying sufficiently high magnetic fields, the magnetization can be fully aligned along a certain direction.
b) In multilayers that comprise, in addition, antiferromagnets, it is possible to induce exchange bias as discussed in R L Stamps J. Phys. D: Appl. Phys. 33 R247. This mechanism exchange-couples the magnetic THz emission layer to the antiferromagnetic layer. By locally heating the antiferromagnetic layer (for instance with a heater or with the same laser pulse used for the excitation of the THz emission) and concurrent application of a short-timed field, the antiferromagnetic layer has its magnetic moments aligned along an axis determined by the field direction (field-cooling effect). After cooling, the magnetic field can be reduced to zero, and the ferromagnetic layer will keep its magnetization strongly aligned along this direction set by the magnetic field.
c) If only a finite number of polarization angles is required (for instance two perpendicular axes as commonly used for switches when combined with a fixed polarizer), magnetic anisotropies can be used. These magnetic anisotropies induce preferred axes for the magnetization direction so that the magnetization stays strongly aligned along these axes even at zero applied field. The magnetic anisotropies can be induced by different approaches is discussed in D. Sander 2004 J. Phys.: Condens. Matter 16 R603. These include strain, growth or magnetocrystalline anisotropy for appropriate choices of the materials, substrates, sample geometries and deposition conditions.

Referring again to FIG. 1, generally, different ways of modulating the magnetization M in layer F of the THz emitter 1 may be implemented, some using external or internal magnetic fields and some using other means, as will be discussed with respect to FIGs. 6 to 18.

Fig. 6 shows an embodiment in which an external magnetic field B_{y} (which is Bₑₓₜ of Fig. 1 in the depicted embodiment) is employed by means of two external AC magnets which are formed by a Helmholtz coil with two identical circular magnetic coils 41, 42 plus a respective yoke (not shown). The coils 41, 42 provide a modulated magnetic field B_{y} along one axis. In between them the THz emitter 1 is located. B_{y} switching the polarity of the magnetic field by 180°, the magnetization M of the magnetic layer F of the emitter 1 (see Fig. 1) is a modulated and, accordingly, the electric field of the emitted THz radiation experiences polarity modulation. Of course, the use of a Helmholtz coil represents an example embodiment only and different devices may be implemented to provide for a magnetic field.

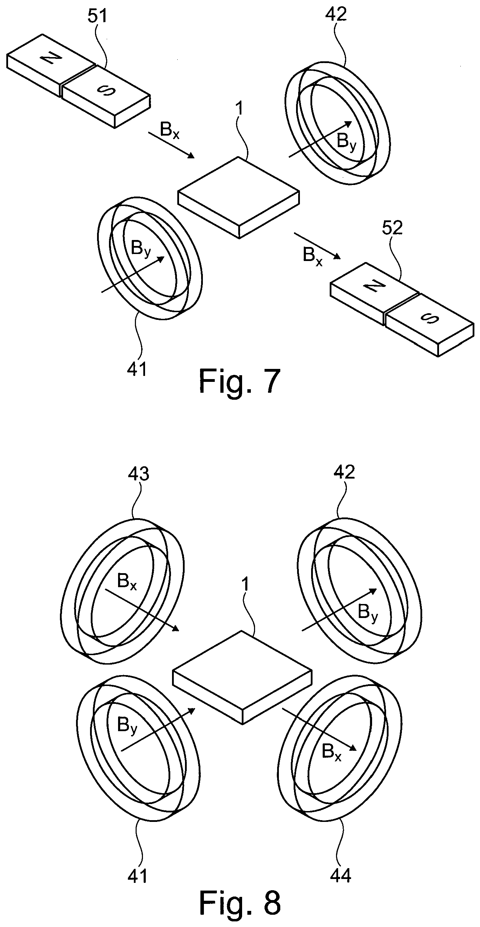

It is pointed out that Fig. 6 also shows schematically a femtosecond laser pulse 2 which is incident on the first layer F in a direction perpendicular to the plane of the first layer F in which drives spin current jₛ (see Fig. 1). However, the femtosecond laser pulse 2 may alternatively be incident from the top (180° turned). It is not of relevance from what direction the femtosecond laser pulse 2 is incident on the first layer F. In subsequent figures 7, 8, 11 to 18, the laser pulse 2 is not explicitly shown but its direction is the same as discussed with respect to Fig. 6. Further, it is pointed out that the emitted THz pulse propagates in the direction of the pump pulse and in the direction where the pump pulse came from, as there are two terahertz pulses generated, one in the forward and one in the backward direction.

In the embodiment of Fig. 7, additionally, a DC magnetic field Bₓ is provided by permanent magnets 51, 52. The field Bx is in a direction perpendicular to the direction of field B_{y}, wherein both fields Bₓ, B_{y} are within the plane of magnetic layer F of THz emitter 1. By adding a DC magnetic field, directional modulation of the magnetization M in the magnetic layer F, and thus of the electric field of the emitted THz pulse becomes a possible in accordance with Fig. 3. By controlling the strengths of the external AC or DC magnetic field, different rotation angles α can be implemented.

In an embodiment (not shown), the DC magnetic field Bₓ is provided by a second magnetic layer F that is put on top of the F/N emitter structure, wherein such second magnetic layer F has a stable in-plane magnetization, i.e., a large coercive field, and thus acts as an external DC magnetic field in Fig. 7.

In the embodiment of Fig. 8, two orthogonal external magnetic fields Bₓ, B_{y} (which together form Bₑₓₜ of Fig. 1) are employed by means of two times two external AC magnets which are formed, e.g., by two Helmholtz coils comprising circular magnetic coils 41-44 plus a respective yoke (not shown). The AC coils 41, 42 and 43, 44 each provide a modulated magnetic field Bₓ, B_{y} along one axis. In between them, and thus in the middle of the four Helmholtz coils 41-44, the THz emitter 1 is located. By modulating the magnetic fields Bₓ, B_{y} the external field Bₑₓₜ and, thus, the magnetization M in layer F can be rotated uniformly over the full circle of 360 degrees periodically. This embodiment thus allows rotation of the magnetic field M and, accordingly, rotation of the plane of the linearly polarized THz radiation 3.

It is pointed out that axis Bₓ, B_{y} do not necessarily need to be exactly orthogonal, but may be arranged along any non-parallel directions that can provide for internal or external magnetic fields that have at least two non-parallel magnetic field components in the plane (xy-plane) of the spintronic THz emitter.

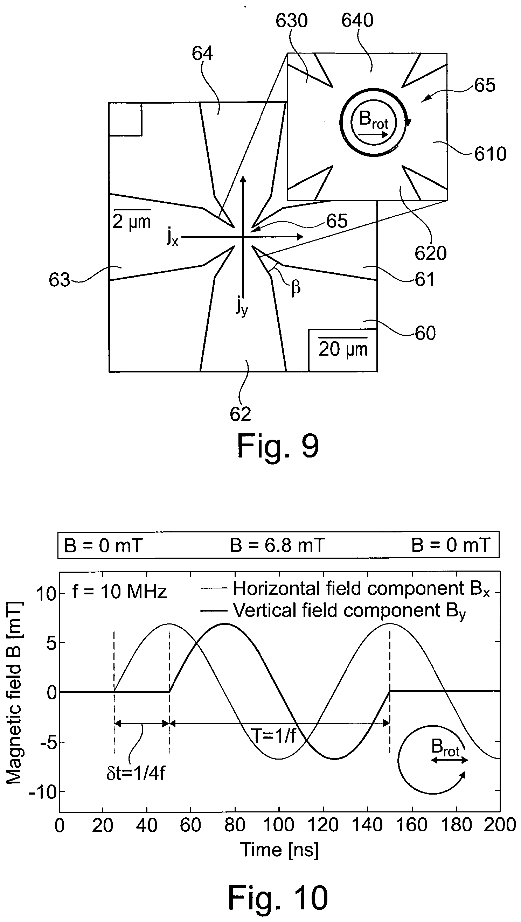

Fig. 9 shows an embodiment in which an internal magnetic field is produced to modulate the magnetization M of layer F. To this end, an underlayer 60 is provided which comprises four conductors 61 to 64 which are arranged in a cross-like manner. The conductors may be stripline conductors. The conductors 61, 63 are guiding a first current jₓ and the conductors 62, 64 are guiding a second current j_{y}, wherein the two currents jₓ and j_{y} run perpendicular to each other and cross. In the crossing area 65 of the conductors 61 to 64, the conductors converge in converging areas 610, 620, 630, 640, wherein adjacent edges run at an angle β to each other of, e.g., 30 degrees.

Each of the currents jₓ, j_{y} creates an Oersted field. The currents jₓ, j_{y} are modulated such that a rotating magnetic field in the megahertz range is created. This is illustrated in Fig. 10 which depicts a horizontal field component Bx and a vertical field component B_{y} of the created Oersted fields that are 90 degrees out of phase, thereby together creating a continuously rotating field Bᵣₒₜ leading to a continuously rotating magnetization M.

This principle of generating a rotating magnetic field has been described in Mawass, M, Kläui M. et al., Phys. Rev. Appl. 7, 044009 (2017) and Richter, K, Kläui M. et al., Phys. Rev. B 94, 24435 (2016). The underlayer 60 is an insulator which may be Si₃N₄. The conductors 61-64 may be formed by Cu and/or Au, such as Cu(150nm)/Au(4nm), or more generally by a metal. If the conductor thickness exceeds 100 nm, a spacer insulator layer the thickness of which exceeds 300 µm may be implemented in the cross region to enable efficient emission of a THz pulse.

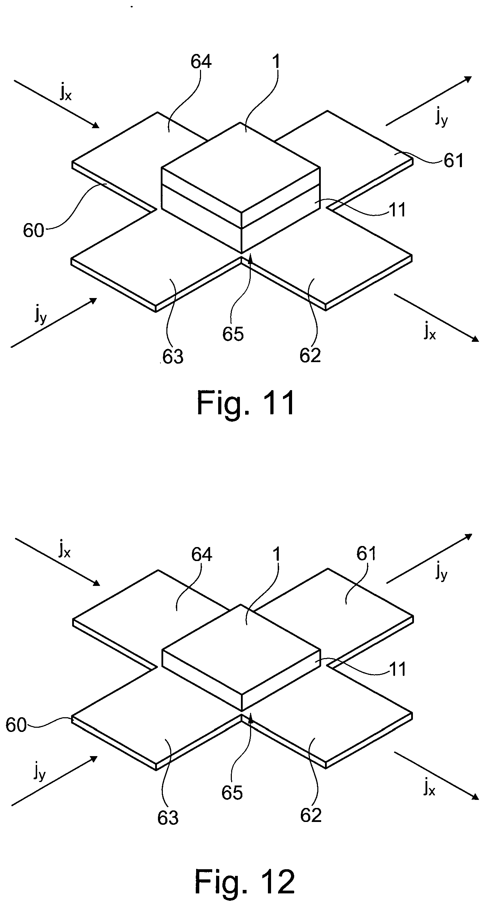

It is pointed out that currents jₓ, j_{y} do not necessarily need to be exactly orthogonal, but may be arranged along any non-parallel directions, as long as they are linearly independent. Accordingly, in such case, the underlayer 60 does not form a cross with two orthogonal axes but a cross in which the two axes are arranged with an angle different than 90° to each other. This also applies to the embodiments of FIGs. 11 to 17.

FIGs. 11 to 13 depict schematic embodiments in which a rotating magnetic field by means of two alternating, linearly independent currents jₓ, j_{y} is created in a similar manner as in FIGs. 9 and 10. In Fig. 11, the THz emitter 1 is placed on top of the crossing area 65 of the conductive conductors 61 to 64, wherein an insulator 11 is arranged between the underlayer 60 and the THz emitter 1. The use of an insulator 11 is preferable if the thickness of conductors 61-64 exceeds 100 nm.

The embodiment of Fig. 12 is similar to the embodiment of Fig. 11 except that no insulator 11 is provided. Accordingly, the THz emitter 1 is placed directly on the crossing area 65 of the conductors 61-64. Such embodiment is preferable if the thickness of conductors 61-64 is equal to or less than 100 nm.

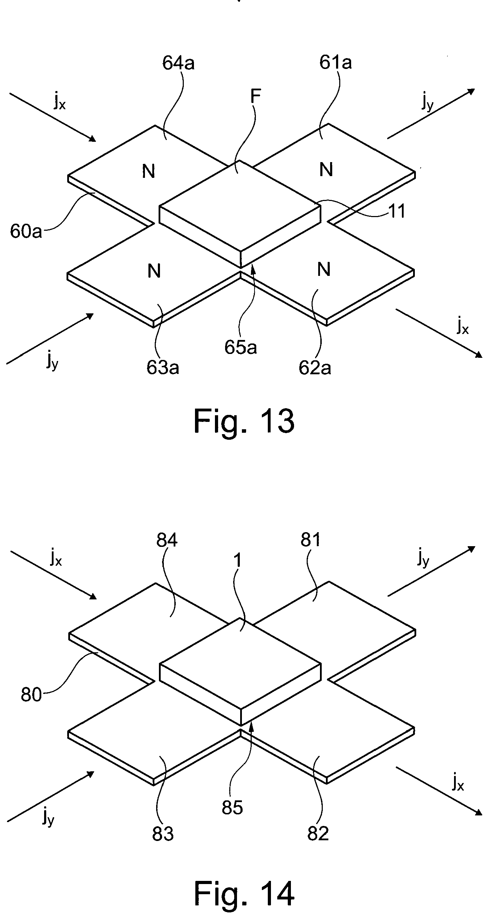

In the embodiment of Fig. 13, an underlayer 600 that comprises conductors 61a to 64a and a crossing area 65a (which are similar to conductors 61 to 64 and crossing areas 65 of Figs. 11 and 12) is a heavy metal layer such as of Cu and/or Au or Pt, and is integrated into the THz emitter. In particular, the nonmagnetic layer N of the THz emitter is integrated with the underlayer 60a. In other embodiments, both the magnetic layer F and the nonmagnetic layer N are integrated with the underlayer 60a. A monolithic integration of the underlayer 60a into the THz emitter is provided in this embodiment.

Fig. 14 shows another embodiment in which an internal magnetic field is produced to modulate the magnetization M of layer F. To this end, spin-orbit torques are produced to switch the direction of magnetization M in the first layer F. Depending on the kind of modulation (see FIGs. 2 and 3), one or several currents are required. Fig. 14 shows an embodiment in which two perpendicular currents jₓ, j_{y} are provided by a spin-orbit-layer 80 forming conducting areas 81 to 85. The spin-orbit layer 80 may be a heavy metal such as Ta (Tantalum) or other material suitable for spin-orbit-coupling. In an embodiment, the spin-orbit-layer 80 includes a thulium iron garnet (TmIG)/Pt capped with a CuOx layer. The emitter 1 with magnetic layer F is located on top of the center area 85 of spin-orbit-layer 80.

This principle of generating a rotating electrical current for producing spin-orbit torques has been described, e.g., in Ding, S, Kläui, M et al., Phys. Rev. Lett. 125, 177201 (2020), in A. Manchon et al., Rev. Mod. Phys. 91, 035004 (2019), and in D. Ralph et al., J. Magn. Magn. Mater. 320, 1190 (2008). The fundamental requirement for the generation of the current-induced torques is a net spin accumulation. It is to be noted that the created spin leads to an internal magnetic field which determines the direction of the magnetization. Using two modulated currents jₓ, j_{y}, a rotating internal magnetic field may be created similar as in FIGs. 9 and 10.

The use of spin-orbit torques to switch the direction of the magnetization M allows switching and rotation of in-plane magnetization at GHz frequencies.

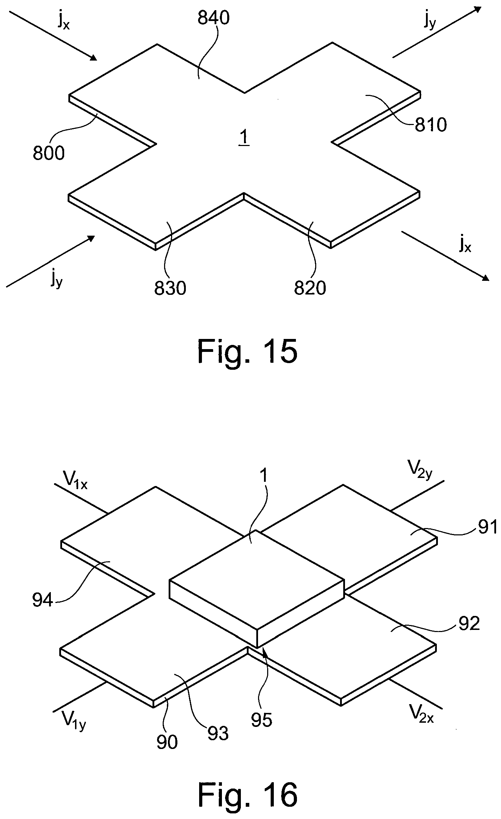

Fig. 15 shows a variant of the embodiment of Fig. 14, wherein the emitter 1 is integrated into a spin-orbit torque producing structure 800. The emitter material may include heavy metal or other materials generating spin-orbit torques.

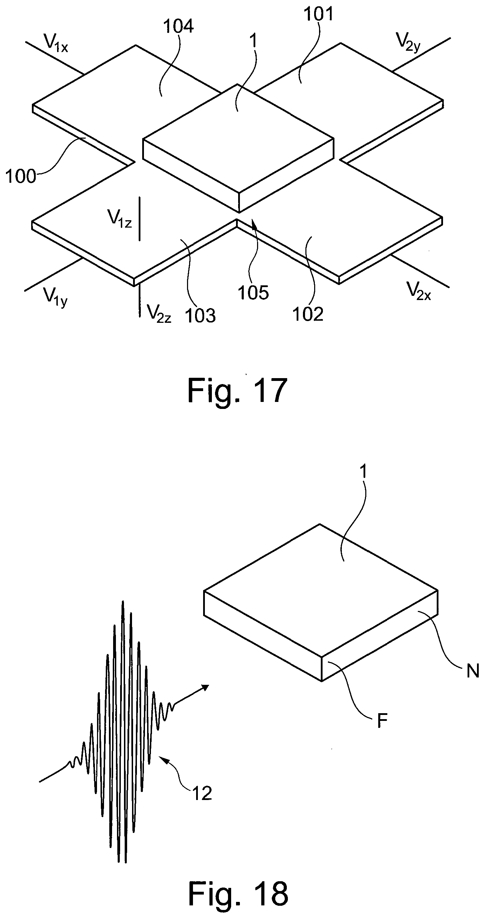

A still further embodiment for modulating the magnetization M in the first layer F is shown in FIGs. 16 and 17. In these embodiments, the magnetization M is not modulated by an internal or external magnetic field, but instead by a voltage which controls magnetic anisotropy in an insulator, which can act as an effective field by direct electric field induced effects or via magnetic elastic coupling in piezoelectric substrates.

According to Fig. 16, an insulator material layer 90 is provided which comprises, in a cross-like arrangement, areas 91 to 95, wherein a THz emitter 1 is arranged on top of the central area 95. Each of the four outer areas 91 to 94 comprises a voltage contact V₁ₓ, V₂ₓ, V_{1y}, V_{ay}, allowing to apply an effective voltage across any direction in the plane leading to an in-plane anisotropy. This allows electric field-induced switching due to voltage control of anisotropies, as described in T. Nozaki et al., Micromachines 2019, 10, 327. The insulator material layer 19 may be a high-k dielectric. In an embodiment, the different voltages V₁ₓ, V₂ₓ, V_{1y}, V_{2y} are applied such to cause the magnetization vector M to rotate between two directions, similar as in Fig. 3, but without external magnetic field.

According to Fig. 17, a piezoelectric material layer 100 is provided which comprises, in a cross-like arrangement, areas 101 to 105, wherein a THz emitter 1 is arranged on top of the central area 105. Each of the four outer areas 101 to 104 comprises a voltage contact V₁ₓ, V₂ₓ, V_{1y}, V_{2y}, allowing to apply an effective voltage across any direction in the plane. This allows electric field control of the magnetization through magnetoelastic coupling in the piezoelectric substrate 100. As typical for a piezoelectric material, the material 100 deforms upon application of a voltage. Such strains induce changes in the magnetization M of the material.

The strain-induced changes in the magnetization can be modulated by modulating the applied voltage. In an embodiment, the different voltages V₁ₓ, V₂ₓ, V_{1y}, V_{2y} are applied such to cause the magnetization vector M to rotate between two directions, similar as in Fig. 3, but without external magnetic field.

Strain-induced changes in magnetization are generally described in H. Sohn et al., ACS Nano. 9, 4814 (2015), and in J. Hu et al., Nano Lett. 16, 2341 (2016).

It is to be noted that the anisotropy axis may be considered to be the equivalent of the DC magnet in Fig.7 if only one direction for the voltage is used (just along x,y or z) and might be combined with an additional AC magnet to get the same functionality as in Fig. 7. When the voltage is AC, then even the functionality from Fig. 8 is obtained.

A still further embodiment for modulating the magnetization M in the first layer F is shown in FIG. 18. In this embodiment, the magnetization M is not modulated by an internal or external magnetic field, but instead by a femtosecond laser pulse 12 (which is different from femtosecond laser pulse 2 of Fig. 1). The laser pulse 12 is generated by a laser system (not shown). The first, magnetic layer F of the THz emitter 1 consists of a material in which, upon interaction with the femtosecond laser pulse 12, the magnetization is reversed from one direction to the other, thereby modulating the magnetization M in the first layer F. Such switching of the spins is also referred to as all-optical switching (AOS) and described, e.g., in G. P. Zhang et al: "Understanding all-optical spin switching: Comparison between experiment and theory", Modern Physics Letters B 32.28 (2018): 1830003, and in V. Sasikala et al., J. Opt. 47, 307 (2018).

With all-optical switching (AOS) ultrafast laser pulses are able to reverse the magnetization from one direction to the other deterministically. Some samples need multiple pulses to switch spins, while others need a single-shot pulse.

## Claims

1. Spintronic terahertz emitter (1) comprising:
- at least one first, magnetic layer (F),
- at least one second layer (N),
- means for producing a magnetization (M) in the first layer (F),
- wherein the first layer (F) is adapted to drive, upon incidence of a femtosecond laser pulse (2) on the first layer (F) in a direction perpendicular to the plane of the first layer (F), a spin current (jₛ) from the first layer (F) into the second layer (N),
- wherein the second layer (N) is adapted to convert the spin current (jₛ) into a transverse charge current (j_{c}) in a direction perpendicular to the magnetization (M) of the first layer (F), the transverse charge current (j_{c}) emitting terahertz radiation (3),
- wherein the emitted terahertz radiation (3) is linearly polarized, and wherein the electric field component of the linearly polarized terahertz radiation lies in a plane that is perpendicular to the magnetization (M) of the first layer (F),
**characterized by**
means (41-44, 51-52, 61-64, 80-84, 90, 100, 12) for modulating the magnetization (M) in the first layer (F) in the kilohertz, megahertz, or gigahertz range, wherein modulation of the magnetization (M) in the first layer (F) causes modulation of the linear polarization of the terahertz radiation (3).

2. Terahertz emitter according to claim 1, **characterized in that** the means (41-44, 51-52, 61-65, 81-85, 90, 100, 12) for modulating the magnetization (M) in the first layer (F) are configured to cause polarity modulation of the linear polarization of the terahertz radiation (3), wherein the magnetization vector of the magnetization (M) is caused to switch between two discrete opposite values.

3. Terahertz emitter according to claim 1, **characterized in that** the means (41-44, 51-52, 61-65, 81-85, 90, 100, 12) for modulating the magnetization (M) in the first layer (F) are configured to cause direction modulation of the linear polarization of the terahertz radiation, wherein the magnetization vector of the magnetization (M) is caused to rotate between two directions (α) or over the full circle of 360°.

4. Terahertz emitter according to any of the preceding claims, **characterized in that** the means for producing a magnetization (M) in the first layer (F) comprise means (41-44, 51-52, 61-65, 81-85) for providing a magnetic field (Bₑₓₜ, Bᵣₒₜ) which comprises at least a component that lies within the plane of the first layer (F), the magnetic field (Bₑₓₜ) producing a magnetization (M) in the first layer (F).

5. Terahertz emitter according to claim 4, **characterized in that** the magnetic field (Bₑₓₜ) is an external magnetic field generated by magnets (41-44, 51-52) external to the first and second layers (F, N).

6. Terahertz emitter according to claim 5, **characterized in that** the magnets (41-44) include at least two external coils or other magnetic field generating devices modulated by alternative current in the kilohertz range.

7. Terahertz emitter according to claim 4, **characterized in that** the magnetic field (Bᵣₒₜ) is a local magnetic field generated by a cross-shaped geometry of conductors (61-64) guiding crossing currents (jₓ, j_{y}), each conductor (61-64) generating an Oersted field.

8. Terahertz emitter according to claim 7, as far as referring to claim 3, **characterized in that** the means (61-64) for providing a magnetic field (Bᵣₒₜ) are configured to modulate the crossing currents (jₓ, j_{y}) such that a rotating magnetic field (Bₑₓₜ) up to the megahertz range is created.

9. Terahertz emitter according to claim 7 or 8, **characterized in that** the first layer (F) is arranged on top of an underlayer (60) that includes the conductors (61-64).

10. Terahertz emitter according to claim 7 or 8, **characterized in that** at least the second layer (N) is integrated in an underlayer (60a) that includes the conductors (61a-64a).

11. Terahertz emitter according to claim 4, **characterized in that** the means for providing a magnetic field (Bᵣₒₜ) include a spin-orbit-layer (80) of spin-orbit-coupling suitable material transporting at least one modulated current (jₓ, j_{y}) in a specified direction, the modulated current (jₓ, j_{y}) leading to an internal modulated magnetic field at the surface of the spin-orbit-layer (80) to switch the direction of magnetization (M) in the first layer (F).

12. Terahertz emitter according to any of claims 1 to 3, **characterized in that** the means for producing a magnetization (M) in the first layer (F) is a modulated voltage applied to an insulator material layer (90) or a piezoelectric material layer (100) adjacent the first layer (F), wherein the voltage modulation produces in-plane anisotropy in the insulator material layer (90) or magnetically anisotropic deformations in the piezoelectric material layer (100) for modulating the magnetization in the first layer (F).

13. Terahertz emitter according to claim 12, as far as referring to claim 3, **characterized in that** the insulator material layer (90) or the piezoelectric material layer (100) has a cross shape, wherein different voltages (V₁ₓ, V₂ₓ, V_{1y}, V_{2y}) are applied to the areas (91-94, 101-104) of the cross to cause modulation of the magnetization vector of the magnetization (M) to rotate between two directions.

14. Terahertz emitter according to claim 1 or 2, **characterized in that** the means for producing a magnetization (M) in the first layer (F) is a means for producing femtosecond laser pulses (12) radiated into the first layer (F), wherein the first layer (F) consists of a material in which, upon interaction with the received femtosecond laser pulses (12), the magnetization (M) is reversed from one direction to the other, thereby modulating the magnetization (M).

15. A method for modulating the linear polarization of terahertz radiation (3) emitted by a spintronic terahertz emitter (1) that comprises a first, magnetic layer (F), a second layer (N), and means for producing a magnetization (M) in the first layer (F), the method **characterized by** modulating the magnetization (M) in the first layer (F) in the kilohertz, megahertz, or gigahertz range, wherein modulation of the magnetization (M) in the first layer (F) causes modulation of the linear polarization of the terahertz radiation (3).

## Patentansprüche

1. Spintronischer Terahertz-Emitter (1), umfassend:
- mindestens eine erste, magnetische Schicht (F),
- mindestens eine zweite Schicht (N),
- Mittel zum Erzeugen einer Magnetisierung (M) in der ersten Schicht (F),
- wobei die erste Schicht (F) dafür ausgelegt ist, beim Auftreffen eines Femtosekunden-Laserpulses (2) auf die erste Schicht (F) in einer Richtung senkrecht zur Ebene der ersten Schicht (F) einen Spinstrom (jₛ) von der ersten Schicht (F) in die zweite Schicht (N) hinein anzusteuern,
- wobei die zweite Schicht (N) dafür ausgelegt ist, den Spinstrom (jₛ) in einen transversalen Ladungsstrom (j_{c}) in einer Richtung senkrecht zur Magnetisierung (M) der ersten Schicht (F) umzuwandeln, wobei der transversale Ladungsstrom (j_{c}) Terahertz-Strahlung (3) emittiert,
- wobei die emittierte Terahertz-Strahlung (3) linear polarisiert ist, und wobei die elektrische Feldkomponente der linear polarisierten Terahertz-Strahlung in einer Ebene liegt, die senkrecht zur Magnetisierung (M) der ersten Schicht (F) verläuft,
**gekennzeichnet durch**
Mittel (41-44, 51-52, 61-64, 80-84, 90, 100, 12) zum Modulieren der Magnetisierung (M) in der ersten Schicht (F) im Kilohertz-, Megahertz- oder Gigahertz-Bereich, wobei die Modulation der Magnetisierung (M) in der ersten Schicht (F) eine Modulation der linearen Polarisation der Terahertz-Strahlung (3) bewirkt.

2. Terahertz-Emitter nach Anspruch 1, **dadurch gekennzeichnet, dass** die Mittel (41-44, 51-52, 61-65, 81-85, 90, 100, 12) zum Modulieren der Magnetisierung (M) in der ersten Schicht (F) dazu eingerichtet sind, eine Polaritätsmodulation der linearen Polarisation der Terahertz-Strahlung (3) zu bewirken, wobei der Magnetisierungsvektor der Magnetisierung (M) veranlasst wird, zwischen zwei diskreten entgegengesetzten Werten zu wechseln.

3. Terahertz-Emitter nach Anspruch 1, **dadurch gekennzeichnet, dass** die Mittel (41-44, 51-52, 61-65, 81-85, 90, 100, 12) zum Modulieren der Magnetisierung (M) in der ersten Schicht (F) dazu eingerichtet sind, eine Richtungsmodulation der linearen Polarisation der Terahertz-Strahlung zu bewirken, wobei der Magnetisierungsvektor der Magnetisierung (M) veranlasst wird, zwischen zwei Richtungen (a) oder über den vollen Kreis von 360° zu rotieren.

4. Terahertz-Emitter nach einem der vorangehenden Ansprüche, **dadurch gekennzeichnet, dass** die Mittel zum Erzeugen einer Magnetisierung (M) in der ersten Schicht (F) Mittel (41-44, 51-52, 61-65, 81-85) zum Bereitstellen eines Magnetfeldes (Bₑₓₜ, Bᵣₒₜ) umfassen, das mindestens eine Komponente umfasst, die innerhalb der Ebene der ersten Schicht (F) liegt, wobei das Magnetfeld (Bₑₓₜ) eine Magnetisierung (M) in der ersten Schicht (F) erzeugt.

5. Terahertz-Emitter nach Anspruch 4, **dadurch gekennzeichnet, dass** das Magnetfeld (Bₑₓₜ) ein externes Magnetfeld ist, das durch Magnete (41-44, 51-52) außerhalb der ersten und zweiten Schicht (F, N) generiert wird.

6. Terahertz-Emitter nach Anspruch 5, **dadurch gekennzeichnet, dass** die Magnete (41-44) mindestens zwei externe Spulen oder andere Magnetfeldgenerierungsvorrichtungen aufweisen, die durch Wechselstrom im Kilohertz-Bereich moduliert werden.

7. Terahertz-Emitter nach Anspruch 4, **dadurch gekennzeichnet, dass** das Magnetfeld (Bᵣₒₜ) ein lokales Magnetfeld ist, das durch eine kreuzförmige Geometrie von Leitern (61-64) generiert wird, die sich kreuzende Ströme (jₓ, j_{y}) führen, wobei jeder Leiter (61-64) ein Oersted-Feld generiert.

8. Terahertz-Emitter nach Anspruch 7, soweit er sich auf Anspruch 3 bezieht, **dadurch gekennzeichnet, dass** die Mittel (61-64) zum Bereitstellen eines Magnetfeldes (Bᵣₐₜ) dazu eingerichtet sind, die sich kreuzenden Ströme (jₓ, j_{y}) so zu modulieren, dass ein rotierendes Magnetfeld (Bₑₓₜ) bis in den Megahertz-Bereich erzeugt wird.

9. Terahertz-Emitter nach Anspruch 7 oder 8, **dadurch gekennzeichnet, dass** die erste Schicht (F) auf einer Unterschicht (60) angeordnet ist, die die Leiterbahnen (61-64) aufweist.

10. Terahertz-Emitter nach Anspruch 7 oder 8, **dadurch gekennzeichnet, dass** mindestens die zweite Schicht (N) in eine Unterschicht (60a) integriert ist, die die Leiter (61a-64a) aufweist.

11. Terahertz-Emitter nach Anspruch 4, **dadurch gekennzeichnet, dass** die Mittel zum Bereitstellen eines Magnetfeldes (Bᵣₒₜ) eine Spin-Orbit-Schicht (80) aus einem zur Spin-Orbit-Kopplung geeigneten Material enthalten, die mindestens einen modulierten Strom (jₓ, j_{y}) in einer spezifizierten Richtung transportiert, wobei der modulierte Strom (jₓ, j_{y}) zu einem internen modulierten Magnetfeld an der Oberfläche der Spin-Orbit-Schicht (80) führt, um die Richtung der Magnetisierung (M) in der ersten Schicht (F) zu wechseln.

12. Terahertz-Emitter nach einem der Ansprüche 1 bis 3, **dadurch gekennzeichnet, dass** das Mittel zum Erzeugen einer Magnetisierung (M) in der ersten Schicht (F) eine modulierte Spannung ist, die an eine Isolatormaterialschicht (90) oder eine piezoelektrische Materialschicht (100) neben der ersten Schicht (F) angelegt wird, wobei die Spannungsmodulation eine in der Ebene befindliche Anisotropie in der Isolatormaterialschicht (90) oder magnetisch anisotrope Verformungen in der piezoelektrischen Materialschicht (100) zum Modulieren der Magnetisierung in der ersten Schicht (F) erzeugt.

13. Terahertz-Emitter nach Anspruch 12, soweit er sich auf Anspruch 3 bezieht, **dadurch gekennzeichnet, dass** die Isolatormaterialschicht (90) oder die piezoelektrische Materialschicht (100) eine Kreuzform aufweist, wobei unterschiedliche Spannungen (V₁ₓ, V₂ₓ, V_{1y}, V_{2y}) an die Bereiche (91-94, 101-104) des Kreuzes angelegt werden, um zu bewirken, dass sich eine Modulation des Magnetisierungsvektors der Magnetisierung (M) zwischen zwei Richtungen dreht.

14. Terahertz-Emitter nach Anspruch 1 oder 2, **dadurch gekennzeichnet, dass** das Mittel zum Erzeugen einer Magnetisierung (M) in der ersten Schicht (F) ein Mittel zum Erzeugen von Femtosekunden-Laserpulsen (12) ist, die in die erste Schicht (F) hineingestrahlt werden, wobei die erste Schicht (F) aus einem Material besteht, in dem bei Wechselwirkung mit den empfangenen Femtosekunden-Laserpulsen (12) die Magnetisierung (M) von einer Richtung zur anderen umgekehrt wird, wodurch die Magnetisierung (M) moduliert wird.

15. Verfahren zum Modulieren der linearen Polarisation von Terahertz-Strahlung (3), die durch einen spintronischen Terahertz-Emitter (1) emittiert wird, der eine erste, magnetische Schicht (F), eine zweite Schicht (N) und Mittel zum Erzeugen einer Magnetisierung (M) in der ersten Schicht (F) umfasst, wobei das Verfahren **gekennzeichnet ist durch** Modulieren der Magnetisierung (M) in der ersten Schicht (F) im Kilohertz-, Megahertz- oder Gigahertz-Bereich, wobei die Modulation der Magnetisierung (M) in der ersten Schicht (F) eine Modulation der linearen Polarisation der Terahertz-Strahlung (3) bewirkt.

## Revendications

1. Émetteur térahertz spintronique (1) comprenant :
- au moins une première couche magnétique (F),
- au moins une deuxième couche (N),
- des moyens pour produire une magnétisation (M) dans la première couche (F),
- dans lequel la première couche (F) est conçue pour stimuler, lors de l'incidence d'une impulsion laser femtoseconde (2) sur la première couche (F) dans une direction perpendiculaire au plan de la première couche (F), un courant de spin (jₛ) à partir de la première couche (F) vers la deuxième couche (N),
- dans lequel la deuxième couche (N) est conçue pour convertir le courant de spin (jₛ) en un courant de charge transverse (j_{c}) dans une direction perpendiculaire à la magnétisation (M) de la première couche (F), le courant de charge transverse (j_{c}) émettant un rayonnement térahertz (3),
- dans lequel le rayonnement térahertz (3) émis est linéairement polarisé, et dans lequel la composante de champ électrique du rayonnement térahertz linéairement polarisé se situe dans un plan qui est perpendiculaire à la magnétisation (M) de la première couche (F),
**caractérisé par**
des moyens (41-44, 51-52, 61-64, 80-84, 90, 100, 12) pour moduler la magnétisation (M) dans la première couche (F) dans une gamme de fréquences en kilohertz, mégahertz ou gigahertz, dans laquelle une modulation de la magnétisation (M) dans la première couche (F) provoque une modulation de la polarisation linéaire du rayonnement térahertz (3).

2. Émetteur térahertz selon la revendication 1, **caractérisé en ce que** les moyens (41-44, 51-52, 61-65, 81-85, 90, 100, 12) pour moduler la magnétisation (M) dans la première couche (F) sont configurés pour provoquer une modulation de polarité de la polarisation linéaire du rayonnement térahertz (3), dans lequel le vecteur de magnétisation de la magnétisation (M) est amené à commuter entre deux valeurs opposées discrètes.

3. Émetteur térahertz selon la revendication 1, **caractérisé en ce que** les moyens (41-44, 51-52, 61-65, 81-85, 90, 100, 12) pour moduler la magnétisation (M) dans la première couche (F) sont configurés pour provoquer une modulation de direction de la polarisation linéaire du rayonnement térahertz, dans lequel le vecteur de magnétisation de la magnétisation (M) est amené à pivoter entre deux directions (a) ou sur un cercle complet de 360°.

4. Émetteur térahertz selon l'une quelconque des revendications précédentes, **caractérisé en ce que** les moyens pour produire une magnétisation (M) dans la première couche (F) comprennent des moyens (41-44, 51-52, 61-65, 81-85) pour fournir un champ magnétique (Bₑₓₜ, Bᵣₒt) qui comprend au moins une composante qui se situe à l'intérieur du plan de la première couche (F), le champ magnétique (Bₑₓₜ) produisant une magnétisation (M) dans la première couche (F).

5. Émetteur térahertz selon la revendication 4, **caractérisé en ce que** le champ magnétique (Bₑₓₜ) est un champ magnétique externe généré par des aimants (41-44, 51-52) externes aux première et deuxième couches (F, N).

6. Émetteur térahertz selon la revendication 5, **caractérisé en ce que** les aimants (41-44) incluent au moins deux bobines externes ou autres dispositifs de génération de champ magnétique, modulés par un courant alternatif dans la gamme des kilohertz.

7. Émetteur térahertz selon la revendication 4, **caractérisé en ce que** le champ magnétique (Bᵣₒₜ) est un champ magnétique local généré par une géométrie en forme de croix de conducteurs (61-64) guidant des courants croisés (jₓ, j_{y}), chaque conducteur (61-64) générant un champ d'Oersted.

8. Émetteur térahertz selon la revendication 7, **dans la mesure où** elle se réfère à la revendication 3, **caractérisé en ce que** les moyens (61-64) pour fournir un champ magnétique (Bᵣₐt) sont configurés pour moduler les courants croisés (jₓ, j_{y}) de façon à ce qu'un champ magnétique tournant soit créé (Bₑₓₜ) jusqu'à la gamme des mégahertz.

9. Émetteur térahertz selon la revendication 7 ou 8, **caractérisé en ce que** la première couche (F) est disposée au-dessus d'une sous-couche (60) qui inclut les conducteurs (61-64).

10. Émetteur térahertz selon la revendication 7 ou 8, **caractérisé en ce qu'**au moins la deuxième couche (N) est intégrée dans une sous-couche (60a) qui inclut les conducteurs (61a-64a).

11. Émetteur térahertz selon la revendication 4, **caractérisé en ce que** les moyens pour fournir un champ magnétique (Bᵣₒₜ) incluent une couche spin-orbit (80) de matériau présentant un couplage spin-orbit adapté, transportant au moins un courant modulé (jₓ, j_{y}) dans une direction déterminée, le courant modulé (jₓ, j_{y}) induisant un champ magnétique interne modulé à la surface de la couche spin-orbit (80) pour commuter la direction de la magnétisation (M) dans la première couche (F).

12. Émetteur térahertz selon l'une quelconque des revendications 1 à 3, **caractérisé en ce que** les moyens pour produire une magnétisation (M) dans la première couche (F) consistent en une tension modulée appliquée à une couche de matériau isolant (90) ou à une couche de matériau piézoélectrique (100) adjacente à la première couche (F), dans lequel la modulation de tension produit une anisotropie dans le plan de la couche de matériau isolant (90) ou des déformations magnétiquement anisotropes dans la couche de matériau piézoélectrique (100), pour moduler la magnétisation dans la première couche (F).

13. Émetteur térahertz selon la revendication 12, dans la mesure où elle se réfère à la revendication 3, **caractérisé en ce que** la couche de matériau isolant (90) ou la couche de matériau piézoélectrique (100) présente une forme en croix, dans lequel différentes tensions (Viₓ, V₂ₓ, Vi_{y}, V_{2y}) sont appliquées aux zones (91-94, 101-104) de la croix pour provoquer une rotation du vecteur de magnétisation de la magnétisation (M) entre deux directions.

14. Émetteur térahertz selon la revendication 1 ou 2, **caractérisé en ce que** les moyens pour produire une magnétisation (M) dans la première couche (F) consistent en des moyens pour produire des impulsions laser femtoseconde (12) irradiant la première couche (F), dans lequel la première couche (F) est constituée d'un matériau au sein duquel, lors d'une interaction avec les impulsions laser femtoseconde reçues (12), la magnétisation (M) est inversée d'une direction à l'autre, modulant ainsi la magnétisation (M).

15. Procédé pour moduler la polarisation linéaire du rayonnement térahertz (3) émis par un émetteur térahertz spintronique (1) qui comprend une première couche magnétique (F), une deuxième couche (N), et des moyens pour produire une magnétisation (M) dans la première couche (F), le procédé étant **caractérisé par** la modulation de la magnétisation (M) dans la première couche (F) dans une gamme de fréquences en kilohertz, mégahertz ou gigahertz, dans lequel la modulation de la magnétisation (M) dans la première couche (F) provoque une modulation de la polarisation linéaire du rayonnement térahertz (3).
